# EUROPÄISCHE PATENTANMELDUNG

(11) **EP 3 028 987 A1**
(43) Veröffentlichungstag der Anmeldung: **08.06.2016**
(21) Anmeldenummer: 14196680.4
(22) Anmeldetag: 06.12.2014
(51) Int. Cl.: B67B 7/00, A47J 45/10, B65D 81/38, B67B 7/18, B67B 7/44

(54) **Werkzeug zum Erfassen oder Betätigen eines Gegenstandes**

(71) Anmelder: Furrer, Armin, 6005 Luzern (CH)
(72) Erfinder: Furrer, Armin, 6005 Luzern (CH)
(74) Vertreter: Rutz & Partner

(57) **Zusammenfassung**

Das Werkzeug (1), das dem Erfassen oder Betätigen eines Gegenstandes dient, umfasst einen flächigen Werkzeugkörper (10), der aus einem elastischen Kunststoffmaterial gefertigt ist. Erfindungsgemäss bildet der Werkzeugkörper (10) ein in sich geschlossenes, hohles Zylinderstück. Alternativ weist der Werkzeugkörper (10) an einander gegenüberliegenden Seiten zueinander komplementäre Verschlusselemente (15, 16) auf, mittels denen der Werkstoffkörper (10) in der Form eines hohlen Zylinderstücks fixierbar ist. Ferner weist der Werkzeugkörper (10) zumindest an der Innenseite eine rutschfeste Oberfläche (11) auf. Das Werkzeug (1) erlaubt es, Behälter (5, 6, 7, 8) sicher zu halten und zu manipulieren, gegebenenfalls zu öffnen. Der Werkzeugkörpers (10) kann in der Folge in der Art eines Ärmels über den Unterarm des Anwenders gezogen und für den nächsten Einsatz bereitgehalten werden.

## Beschreibung

Die Erfindung betrifft ein Werkzeug zum Erfassen und Betätigen eines Gegenstandes, insbesondere zum Lösen eines Verschlusses von einem Behälter.

Aus dem Stand der Technik sind zahlreiche Werkzeuge bekannt, die es erlauben Gefässe oder Behälter zu öffnen. Die Werkzeuge dienen insbesondere dazu, eine feste Verbindung mit dem Deckel des Behälters herzustellen, sodass dieser anschliessend gedreht werden kann, ohne dass ein Schlupf auftritt.

Aus der US20030061912A1 ist ein hebelförmiger Flaschenöffner bekannt, der es erlaubt, einen Flaschenverschluss zu erfassen und zu drehen.

Aus der US20060216472A1 ist ein zangenförmiges Werkzeug bekannt, welches erlaubt, verschiedenartige Verschlüsse von Behältern, wie Flaschen und Büchsen, zu öffnen.

Aus der US20080072709A1 ist ein ringförmiges Werkzeug bekannt, welches auf einen Drehverschluss aufgesetzt werden kann, um diesen zu lösen.

Aus der US20130298508A1 ist ein Büchsenöffner mit einem Riemen bekannt, mittels dessen ein grösserer Deckel umschlossen, festgespannt und gedreht werden kann.

Obwohl einige dieser Werkzeuge es erlauben, verschiedene Verschlüsse oder Deckel zu erfassen und von einem Behälter zu lösen, ist deren Einsatzbereich stark begrenzt. Neben den beschränkten Öffnungsfunktionen weisen diese bekannten Werkzeuge keine weiteren nützlichen Funktionen auf, die insbesondere in Verbindung mit den geöffneten Behältern z.B. im Arbeitsbereich einer Küche hilfreich sein könnten. Zudem sind diese Werkzeuge oft nicht griffbereit, wenn sie benötigt werden.

Weiterhin sind diese Werkzeuge regelmässig mit grösserem Aufwand zu reinigen.

Besonders nachteilig ist ferner, dass mittels dieser Werkzeuge der Deckel, nicht aber der Behälter selbst sicher erfasst werden kann. Sofern das Werkzeug und somit der gehaltene Deckel mit einer Hand gedreht wird, geschieht es oft, dass der Behälter selbst mit der anderen Hand nicht sicher gehalten werden kann, sodass der Einsatz des Werkzeugs nicht zum Ziel führt.

Ferner besteht bei bekannten Lösungen der Nachteil, dass beim Vorgang des Öffnens eines Behälters meist viel Kraft aufgewendet wird, die einerseits auf den Verschluss und andererseits auf den Behälter einwirkt. Sobald sich der Deckel oder Verschluss und der Behälter unter grosse Krafteinwirkung voneinander lösen, werden diese beschleunigt. Der Behälter wird dadurch unter Umständen ruckartig nach vorn gestossen, sodass darin gespeichertes Gut ausgeschüttet wird. Vereinzelt können der Behälter oder der Verschluss auch zu Boden fallen.

Zu beachten ist ferner, dass mit den konventionellen Werkzeugen normalerweise keine heissen Behälter und Gefässe manipuliert und geöffnet werden können. Das Werkzeug kann kaum angesetzt werden und der heisse Behälter kann nicht sicher gehalten werden.

Der Anwendungsbereich konventioneller Werkzeuge ist daher stark beschränkt. Zudem ist die Handhabung dieser Werkzeuge wenig effizient. Hingegen sind diese Werkzeuge oft kompliziert aufgebaut und teuer in der Herstellung. Ferner sind diese Werkzeuge oft mit grösserem Aufwand zu warten und zu reinigen. Der vorliegenden Erfindung liegt daher die Aufgabe zugrunde, ein verbessertes Werkzeug zu schaffen. Insbesondere ist ein Werkzeug zu schaffen, welches dem Öffnen eines Behälters dient und zudem zahlreiche Funktionen aufweist, die insbesondere im Gastronomiebereich hilfreich sind. Das Werkzeug soll problemlos getragen und gereinigt werden können.

Ferner wäre es wünschenswert, wenn das Werkzeug wahlweise an eine bestimmte Funktion oder an einen bestimmten Verwendungszweck, insbesondere an unterschiedliche Dimensionen von Behältern angepasst werden kann.

Diese Aufgabe wird mit einem Werkzeug gelöst, welches die in Anspruch 1 angegebenen Merkmale aufweist. Vorteilhafte Ausgestaltungen der Erfindung sind in weiteren Ansprüchen angegeben.

Das Werkzeug, das dem Erfassen oder Betätigen eines Gegenstandes, insbesondere dem Öffnen eines Behälters dient, umfasst einen flächigen Werkzeugkörper, der aus einem elastischen Kunststoffmaterial gefertigt ist.

Erfindungsgemäss bildet der Werkzeugkörper ein in sich geschlossenes, hohles Zylinderstück. Alternativ weist der Werkzeugkörper an einander gegenüberliegenden Seiten zueinander komplementäre Verschlusselemente auf, mittels denen der Werkzeugkörper in der Form eines hohlen Zylinderstücks fixierbar ist. Ferner weist der Werkzeugkörper zumindest an der Innenseite eine rutschfeste Oberfläche auf.

Als Innenseite wird die dem Gegenstand zugewandte Seite und als Aussenseite wird die der Hand des Anwenders zugewandte Seite des Werkzeugkörpers bezeichnet.

Das Werkzeug ist einfach aufgebaut, kostengünstig herstellbar und vielfältig einsetzbar. Das Werkzeug kann effizient und von allen Anwendergruppen, insbesondere auch von älteren Personen in einfacher Weise eingesetzt werden. Aufgrund der vielfältigen Einsatzmöglichkeiten, z.B. in der Küche einer Gaststätte, resultieren eine hohe Effizienz und ein hoher Nutzen des Werkzeugs.

Mittels des Werkzeugs können Gegenstände, insbesondere Behälter vorteilhaft manipuliert werden. Behälter und Gefässe, die mit einem drehbar befestigten Deckel abgeschlossen sind, können in einfacher Weise geöffnet werden. Dabei wird verhindert, dass der Behälter und der Verschluss nach dem gegenseitigen Lösen ausser Kontrolle geraten und gegebenenfalls zu Boden fallen können.

Der Behälter wird soweit in das elastische und leicht deformierbare Zylinderstück hinein geschoben, bis der Behälter und dessen Verschluss bzw. Deckel vom Werkzeugkörper umschlossen sind. In der Folge können sowohl der Behälter, als auch der Verschluss vom Werkzeugkörper erfasst, schlupffrei gehalten, und gedreht werden. Nach dem Öffnen des Behälters verbleibt eine Verbindung zwischen dem Behälter und dem Verschluss durch den Werkzeugkörper. Der Behälter und der Verschluss bleiben daher sicher gehalten und können nicht zu Boden fallen oder ruckartige Bewegungen ausführen.

Besonders vorteilhaft ist ferner, dass das Werkzeug aufgrund seiner Isolationseigenschaften auch über heisse Behälter und Gefässe gestülpt werden kann, um diese zu manipulieren, z.B. zu öffnen. Der Anwender gerät daher nicht in Kontakt mit dem heissen Behälter und benötigt keine weiteren Hilfsmittel. Bei den bekannten Werkzeugen muss der Behälter hingegen z.B. mittels eines Tuchs gehalten werden, bevor das Werkzeug mit dem Verschluss gekoppelt und gedreht werden kann. In der Folge tritt jedoch zumeist eine Schlupf zwischen dem Tuch und dem Behälter auf, sodass dieser nicht geöffnet werden kann.

Der Werkzeugkörper kann dabei deformiert und einerseits an den Durchmesser des Behälters und andererseits an den Durchmesser des Verschlusses angepasst werden. Das erfindungsgemässe Werkzeug erlaubt es somit, verschiedenartige Behälter zu öffnen, die sich hinsichtlich der Abmessungen des Behälters und des Verschlusses stark unterscheiden. Mit einem Werkzeug können somit Behälter und Flaschen geöffnet werden, die Verschlüsse aufweisen, die gedreht und dadurch vom Behälter gelöst werden können. Z.B. kann auch ein Korken von einer Flasche gelöst werden, indem er mittels des Werkzeugs erfasst und gedreht und gleichzeitig nach aussen verschoben wird.

Wie erwähnt, ist der Werkzeugkörper wenigstens auf der Innenseite bzw. der dem Behälter zugewandten Seite mit einer rutschhemmenden Oberfläche ausgebildet, sodass ein Schlupf zwischen Behälter und Deckel einerseits und dem Werkzeugkörpers andererseits ausgeschlossen wird.

Vorzugsweise ist jedoch auf die Aussenseite bzw. die der Hand des Anwenders zugewandte Seite des Werkzeugkörpers mit einer rutschhemmenden Oberfläche versehen. Dadurch wird auch ein Schlupf zwischen der Aussenseite des Werkzeugkörpers und der Hand des Anwenders vermieden.

Eine Rutschhemmung wird durch passende Wahl des Materials und/oder durch Strukturierung oder Profilierung der Oberfläche des Werkzeugkörpers erzielt.

Vorzugsweise ist der Werkzeugkörper in der Form des Zylinderstücks zumindest an der Innenseite mit einem rutschhemmenden Profil versehen. Das rutschhemmende Profil kann vorteilhaft auch an der Innenseite und der Aussenseite des Werkzeugkörpers vorgesehen werden. Ferner können auf den einander gegenüberliegenden Grundseiten des Werkzeugkörpers unterschiedliche Profile vorgesehen werden, sodass der Anwender die Innenseite und die Aussenseite des Werkzeugkörpers miteinander vertauschen und jeweils das bevorzugte Profil verwenden kann.

In vorteilhaften Ausgestaltungen kann der Werkzeugkörper derart manipuliert werden, dass Innenseite und Aussenseite vertauscht werden. Z.B. besteht der Werkzeugkörper aus einer flexiblen Grundplatte, deren gegenüberliegende Seiten durch Verbindungselemente miteinander verbunden werden können. Die Endstücke des Werkzeugkörpers können daher auf die eine oder andere Seite gedreht und durch Betätigung der Verbindungselemente miteinander verbunden werden.

Alternativ kann der in sich geschlossene, rohrförmige oder schlauchförmige Werkzeugkörper aufgrund der für diesen Fall vorgesehenen hohen Flexibilität auch von innen nach aussen gedreht werden, sodass die Aussenseite des Werkzeugkörpers zur Innenseite wird.

In bevorzugten Ausgestaltungen weist der Werkzeugkörper z.B. auf der einen oder der anderen Seite rutschhemmende Strukturelemente oder Strukturreformen, wie Längsrippen, Rillen, Wellen, Sägezahnformen oder Pyramiden auf. Die Strukturelemente können in Vertiefungen im Behälter oder im Verschluss bzw. Deckel eingreifen, wodurch nicht nur eine kraftschlüssige, sondern auch eine formschlüssige Verbindung resultiert, die es erlaubt, den Behälter und den Verschluss oder Deckel schlupffrei gegeneinander zu drehen.

Vorzugsweise verlaufen die auf der Innenseite und der Aussenseite des Werkzeugkörpers vorgesehenen Strukturelemente oder Strukturreformen zumindest annähernd parallel zueinander. In diesem Fall weisen der Werkzeugkörper nicht nur beidseitig rutschhemmende Strukturen, sondern gleichzeitig auch eine hohe Elastizität auf. Z.B. durch eine wellenförmige Ausgestaltung des Werkzeugkörpers bildet dieser eine Feder, die auseinandergezogen werden kann. Der Werkzeugkörper besteht in bevorzugten Ausgestaltungen aus einem dehnungselastischen Kunststoff. Alternativ oder zusätzlich weist der Werkzeugkörper eine dehnbare Struktur auf. Z.B. sind Materialausnehmungen derart vorgesehen, dass ein Materialgerippe, z.B. ein Materialgerippe in Wabenform verbleibt. Die Verbindungen der Rippen bilden dabei Gelenke, welche eine Deformation des Werkzeugkörpers erlauben.

Besonders vorteilhaft kann ein solches Materialgerippe zwischen zwei isolierenden Schichten vorgesehen werden, durch die die Materialausnehmungen abgedeckt werden.

Die Materialausnehmungen oder die Schwächung des Werkzeugkörpers kann vorteilhaft auch im mittleren Bereich des Werkzeugkörpers vorgesehen werden. Der mittlere Bereich des Werkzeugkörpers bildet in diesem Fall eine Art Gelenk, welches erlaubt, den unteren Teil des Werkzeugkörpers, welcher den Behälter umfasst, und den oberen Teil des Werkzeugkörpers, welcher den Verschluss umfasst, leicht gegeneinander zu drehen.

Der Werkzeugkörper kann sogar vorteilhaft vor gespannt werden, um das Lösen des Verschlusses zu erleichtern. Dazu wird der Werkzeugkörper an einem Ende in Schliessrichtung gedreht, ohne den Verschluss zu erfassen. Sobald der Werkzeugkörper gespannt ist, wird der Verschluss erfasst und in Gegenrichtung gedreht. In der Folge wirken die Vorspannung und die Muskelkraft des Anwenders auf den Verschluss ein.

In weiteren vorzugsweisen Ausgestaltungen weist der Werkzeugkörper eine thermisch isolierende Struktur auf, was z.B. ebenfalls mittels Materialausnehmungen realisiert werden kann. Der Werkzeugkörper wird z.B. mit einer Vielzahl von Hohlräumen versehen, die nach aussen geöffnet oder verschlossen sind. Z.B. weist der Werkzeugkörpers auf Wabenstruktur auf, die verschlossen oder nach einer oder beiden Seiten geöffnet ist.

In besonders bevorzugten Ausgestaltungen weist der Werkzeugkörper mehrere hohle Kanäle auf, die den Werkzeugkörper parallel oder schräg zu seiner Längsachse durchlaufen und die verschlossen oder in eine Richtung geöffnet sind. Diese Längskanäle verleihen dem Werkzeugkörper eine hohe Flexibilität. Sofern die Längskanäle einseitig geöffnet sind, wirken sie zudem rutschhemmend. Durch die Materialausnehmungen können somit einerseits rutschhemmende Eigenschaften und thermisch isolierende Eigenschaften erzielt werden.

Zusätzlich oder alternativ ist der Werkzeugkörpers aus einem thermisch isolierenden und vorzugsweise feuerfesten Kunststoff gefertigt.

Das Werkzeug erlaubt es somit auch heisse Gegenstände zu manipulieren. Es kann eine heisse Pfanne oder ein heisses Backblech erfasst und transportiert werden. Zusätzlich kann das Werkzeug auch als Unterlage für heisse Gegenstände verwendet werden, um z.B. einen Tisch zu schützen.

Der Werkzeugkörper besteht vorzugsweise aus einer einzigen Schicht, die mittels eines Giessverfahrens oder eines Extrusionsverfahrens einfach und kostengünstig gefertigt werden kann.

In weiteren vorzugsweisen Ausgestaltungen besteht der Werkzeugkörper aus einem Laminat mehrere Schichten. Z.B. werden feuerfeste und abriebfeste äussere Schichten vorgesehen, die relativ dünn ausgebildet sind, und die eine elastische Zwischenschicht einschliessen, die dicker ausgebildet ist. Ferner kann eine wenig abriebfeste Zwischenschicht aus Gummi oder Naturgummi oder eine Zwischenschicht mit Ausnehmungen zwischen zwei abriebfesten Elastomerschichten eingeschlossen werden.

Der Werkzeugkörper oder zumindest eine der Schichten des Werkzeugkörpers wird vorzugsweise aus einem temperaturbeständigen und vorzugsweise feuerfesten Elastomer, wie Fluorelastomer, Neopren oder Silikon gefertigt.

Der Werkzeugkörper wird je nach Anwendungsbereich konfektioniert. Im industriellen Bereich, in dem grössere Gegenstände manipuliert werden, werden die Abmessungen grösser gewählt als im Haushaltsbereich, in dem Flaschen, Büchsen und Dosen, Pfannen und weitere Gefässe und Schüsseln manipuliert werden.

Z.B. weist der Werkzeugkörper eine Dicke im Bereich von etwa 0.4 mm - 10 mm auf. Für den Haushalt sind Dicken im Bereich von 0.4 mm - 1 mm besonders vorteilhaft. Der Werkzeugkörper ist in diesem Fall leicht und flexibel und kann von jedermann vorteilhaft gehandhabt werden.

In der Normalform des Zylinderstücks weist der Werkzeugkörper einen Zylinderdurchmesser vorzugsweise im Bereich von etwa 75 mm - 200 mm und eine Zylinderhöhe vorzugsweise im Bereich von etwa 100 mm - 250 mm auf.

Wie erwähnt, weist das Werkzeug zahlreiche vorteilhafte Funktionen auf, von denen einige bereits beschrieben wurden. Das Werkzeug weist jedoch weitere vorteilhafte Eigenschaften und Funktionen auf.

Aufgrund der Ausgestaltung in der Form eines flexiblen dünnwandigen Hohlzylinders kann das Werkzeug vorteilhaft über den Unterarm gestreift und für den Einsatz bereitgehalten werden. Bei Bedarf wird das Werkzeug über die Hand gezogen, die nun geschützt durch das Werkzeug einen heissen Gegenstand ergreifen und manipulieren kann. Besonders vorteilhaft ist, dass die Hand rundum geschützt ist. Beim Eingriff in einen Ofen kann z.B. eine Schüssel erfasst werden, ohne dass der Handrücken in Kontakt mit einem heissen Teil des Ofens gerät. Das Werkzeug wirkt dabei als Handschuh, der nach der Manipulation eines Gegenstandes jedoch nicht abgezogen werden muss, sondern zurück über den Ärmel gezogen werden kann.

Die Strukturierung oder Profilierung der dem Unterarm des Anwenders zugewandten Innenseite des Werkzeugkörpers ist auch aus diesem Grund von Vorteil. Der Werkzeugkörper liegt nicht flächig am Unterarm an, sodass Luft zwischen dem Unterarm und dem Werkzeugkörper zirkulieren kann.

Die bevorzugte Ausführung des Werkzeugs mit einer Wellenstruktur ergibt eine genügende Elastizität, damit das Werkzeug bequem über die Hand gestreift werden kann und trotzdem bei der weiteren Tätigkeit nicht hinderlich ist. Dies deshalb, weil das elastische Werkzeug den Unterarm eng umschliesst ohne dabei einen unangenehmen Druck auf den Arm zu verursachen. Das Werkzeug bleibt auch bei hängendem Arm unverrückbar an der gewünschten Stelle. Die Wellenstruktur gewährleistet gleichzeitig die nötige Luftzirkulation, um bei dieser Anwendung des Werkzeugs ein unangenehmes Schwitzen zu verhindern. durch die Elastizität

Das Werkzeug muss daher nicht irgendwo deponiert und wieder geholt bzw. gesucht werden, sondern ist stets griffbereit, ohne jedoch zu stören. Insbesondere in der Küche, in der meist wenig freier Platz zur Verfügung steht und Gegenstände in rascher Abfolge manipuliert werden, ist dies besonders hilfreich. Das Werkzeug nimmt keinen Platz in Anspruch, der anderweitig benötigt wird, muss nie gesucht werden und ist innerhalb weniger Sekunden einsatzbereit.

Nachfolgend wird die Erfindung anhand von Zeichnungen näher erläutert. Dabei zeigt:
- Fig. 1a: ein erfindungsgemässes elastisches Werkzeug 1 sowie einen mit einem Deckel 61 abgeschlossener Glasbehälter 6;
- Fig. 1b: den Behälter 6 und, in zylindrischer Form, das Werkzeug von Fig. 1a;
- Fig. 1c: das Überstreifen des Werkzeugs 1 über den Behälter 6;
- Fig. 1d: den Behälter 6 mit dem übergestreiften Werkzeug 1;
- Fig. 1e: das Erfassen des im Werkzeug 1 gehaltenen Behälters 6 mit der rechten Hand und das Erfassen des Deckels 61 des Behälter 6 mit der linken Hand;
- Fig. 1f: die Drehung des im Werkzeug 1 gehaltenen Gasbehälters 6 und des Deckels 61 in entgegengesetzte Richtungen;
- Fig. 1g: den geöffneten Behälter 6 und den aus dem Werkzeug 1 entnommenen Deckel 61;
- Fig. 2a: das Werkzeug 1 von Fig. 1a in der Ausgestaltung eines Ärmels, welcher über den Unterarm des Anwenders gestreift ist und so getragen werden kann, bis dessen Einsatz erforderlich ist;
- Fig. 2b: die Positionierung des Werkzeugs 1 über der rechten Hand;
- Fig. 2c: das Ergreifen eines heissen Behälters 5 durch die rechte Hand, die durch das Werkzeug 1 geschützt ist;
- Fig. 2d: die Verschiebung des Werkzeugs 1 nach dessen Verwendung in den Ruhebereich, in dem das Werkzeug 1 wieder den Unterarm des Anwenders umschliesst;
- Fig. 3a: das Werkzeug 1 von Fig. 1 sowie eine Pfanne 7 mit einem Pfannenstiel 71;
- Fig. 3b: die Pfanne 7 mit dem über den Pfannenstiel 71 gestreiften Werkzeug 1;
- Fig. 3c: die Pfanne 7 mit dem Werkzeug 1 als Unterlage;
- Fig. 4a: das über den Hals einer Flasche 8 gestreifte Werkzeug 1 mit dem von der Flasche 8 gelösten Verschluss oder Zapfen 81;
- Fig. 4b: das Werkzeug 1 während des Überstreifens über die Flasche 8;
- Fig. 4c: die Flasche 8 mit dem übergestreiften Werkzeug 1;
- Fig. 5a: den Querschnitt des von oben gesehenen Werkzeugs 1;
- Fig. 5b: das einseitig expandierte Werkzeug von Fig. 1 von oben gesehen;
- Fig. 5c: das Werkzeug 1 von Fig. 5b von der Seite gesehen; und
- Fig. 5d: ein vorzugsweise ausgestaltetes Werkzeug 1 welches als elastische Platte ausgestaltet und mit Verbindungselementen 15, 16 versehen ist, die es erlauben, zwei einander gegenüberliegende Seiten des Werkzeugs 1 miteinander zu verbinden, wodurch die Form eines Zylinderstücks oder Ärmels resultiert, wie sie in Fig. 2a gezeigt ist.

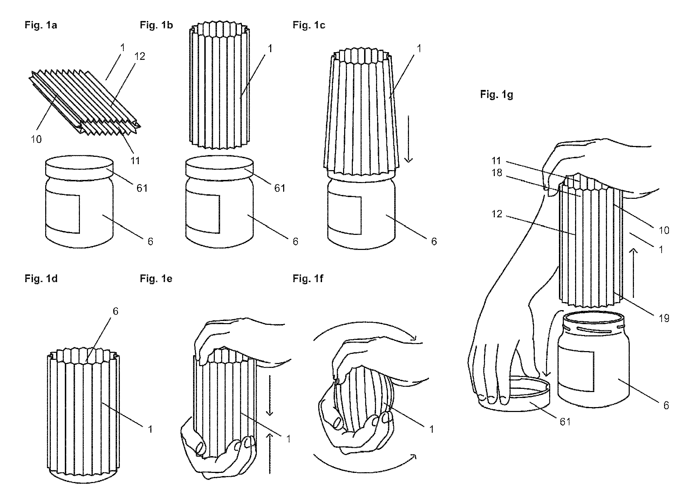

Fig. 1a zeigt das Werkzeug 1 sowie einen mit einem Deckel 61 abgeschlossener Glasbehälter 6. Das Werkzeug 1 umfasst einen in sich geschlossenen plattenförmigen Werkzeugkörper 10, der zu einem Quader gefaltet wurde. Der Werkzeugkörper 10 weist einen sägezahnförmigen oder wellenförmigen Querschnitt auf, weshalb auch die Oberseite und Unterseite bzw. die Innenseite 11 und die Aussenseite 12 des Werkzeugkörpers 10 parallel zueinander sägezahnförmig oder wellenförmig verlaufen. Das resultierende Profil erlaubt es, Gegenstände sicher zu erfassen. Beim Einsatz des Werkzeugs 1 resultiert eine rutschfeste Verbindung einerseits zwischen dem Behälter und dem Verschluss und dem Werkzeugkörper und andererseits zwischen den Händen des Anwenders und dem Werkzeugkörper.

Der Werkzeugkörper 10 besteht z.B. aus einer Silikon-Schicht, die mittels eines Extrusionsverfahrens vorteilhaft gefertigt werden kann. Aufgrund der Materialbeschaffenheit und der Ausformung ist der Werkzeugkörper rutschfest und thermisch isolierend.

Fig. 1b zeigt den Gasbehälter 6 sowie, in zylindrische Form, das Werkzeug von Fig. 1a. Das Werkzeug 1 kann daher in verschiedene Formen gebracht werden, in denen es an einen zu manipulieren Gegenstand angepasst ist.

Fig. 1c zeigt das Überstreifen des Werkzeugs 1 über den Behälter 6 und Fig. 1d den Behälter 6 mit dem übergestreiften Werkzeug 1.

Fig. 1e zeigt das Erfassen des im Werkzeug 1 gehaltenen Behälters 6 mit der rechten Hand und das Erfassen des Deckels 61 des Behälter 6 mit der linken Hand und Fig. 1f zeigt die Drehung des im Werkzeug 1 gehaltenen Gasbehälters 6 und des Deckels 61 in entgegengesetzte Richtungen. Der Gasbehälter 6 und der Deckel 61 können daher mittels des Werkzeugs 1 schlupffrei gehalten und gedreht werden. Das Werkzeug 1 passt sich dabei unter manuellem Druck an den Behälter 6 und den Deckel 61 an. Es können somit Behälter 6 mit stark voneinander abweichenden Dimensionen mittels des Werkzeugs 1 manipuliert werden.

Fig. 1g zeigt den geöffneten Behälter 6 und den aus dem Werkzeug 1 entnommenen Deckel 61. Gezeigt ist der Werkzeugkörper 10 mit der Innenseite 11 und der Aussenseite 12 sowie dem oberen Endstück 18 und dem unteren Endstück 19.

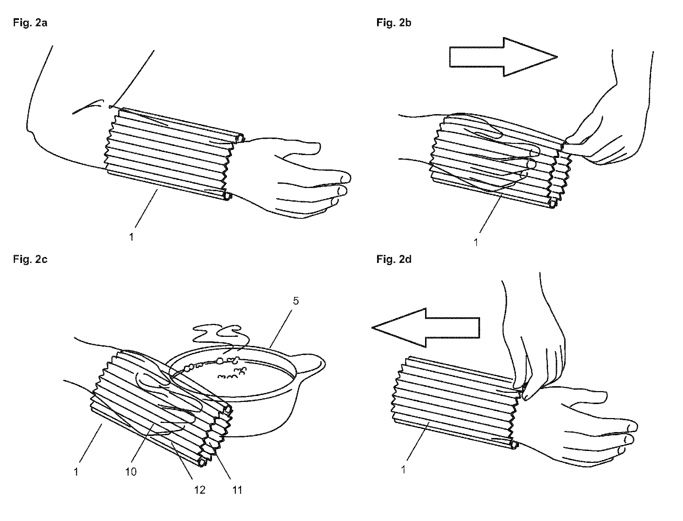

Fig. 2a zeigt das Werkzeug 1 von Fig. 1a in der zylindrischen Form bzw. in der Ausgestaltung eines Ärmels, welcher über den Unterarm des Anwenders gestreift ist und so getragen werden kann, bis dessen Einsatz erforderlich ist. Hier resultiert ein weiterer Vorteil der Profilierung der Innenseite 11 des Werkzeugkörpers 10. Das Profil an der Innenseite 11 des Werkzeugkörpers 10 erlaubt die Zirkulation von Luft, sodass Feuchtigkeit aus dem Bereich des Unterarms des Anwenders abtransportiert werden kann, wenn das Werkzeug am Unterarm getragen wird.

Besonders vorteilhaft ist eine federelastische Ausgestaltung des Werkzeugkörpers 10, der vorzugsweise wellenförmig oder sägezahnförmig ausgestaltet wird. Der Werkzeugkörper kann sich daher elastisch an den Unterarm des Anwenders anpassen und kann leicht übergestreift und wieder entfernt werden.

Fig. 2b zeigt wie das Werkzeug 1 aus der Position von Fig. 2a nach vorn gezogen und über der rechten Hand positioniert wird.

In dieser Position kann ein heisser Behälters 5 durch die vom Werkzeug 1 geschützte rechte Hand z.B. in einem Ofen erfasst und herausgenommen werden, wie dies Fig. 2c zeigt.

Fig. 2d zeigt, dass das Werkzeug nach Gebrauch wieder in den Ruhebereich über dem Unterarm des Anwenders geschoben werden kann. In dieser Position des Werkzeugs 1 hat der Anwender seine Hände wieder frei und kann ungehindert seiner Arbeit nachgehen. Es muss kein Platz für die Deponie des Werkzeugs 1 vorgesehen werden. Ebenso kann das Werkzeug 1 nicht verloren gehen.

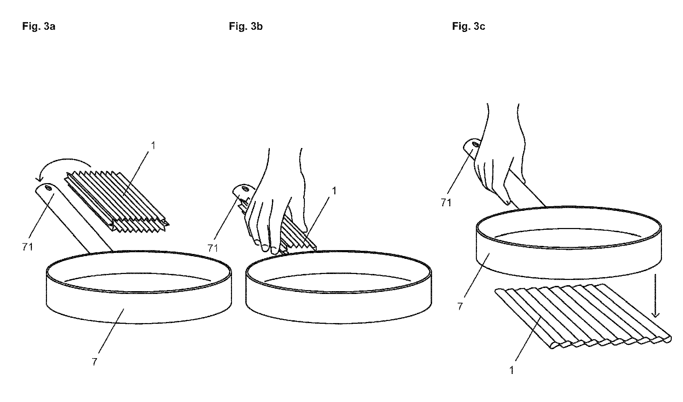

Fig. 3a zeigt das Werkzeug 1 von Fig. 1 sowie eine erwärmte Pfanne 7 mit einem Pfannenstiel 71. Fig. 3b zeigt die Pfanne 7 mit dem über den Pfannenstiel 71 gestreiften Werkzeug 1, welches somit als thermische Isolation für den Pfannenstiel verwendbar ist. Fig. 3c zeigt die Pfanne 7 mit dem Werkzeug 1 als Unterlage.

Das Werkzeug 1 kann somit besonders vorteilhaft zur Manipulation von Pfannen und weiteren Bratgefässen verwendet werden. Ein Koch z.B. kann das Werkzeug 1 vom Unterarm ziehen eine Pfanne manipulieren und diese auf dem isolierenden Werkzeug abstellen, sodass sich die Pfanne nicht auf einer Unterlage aus Stein oder Metall abkühlen kann.

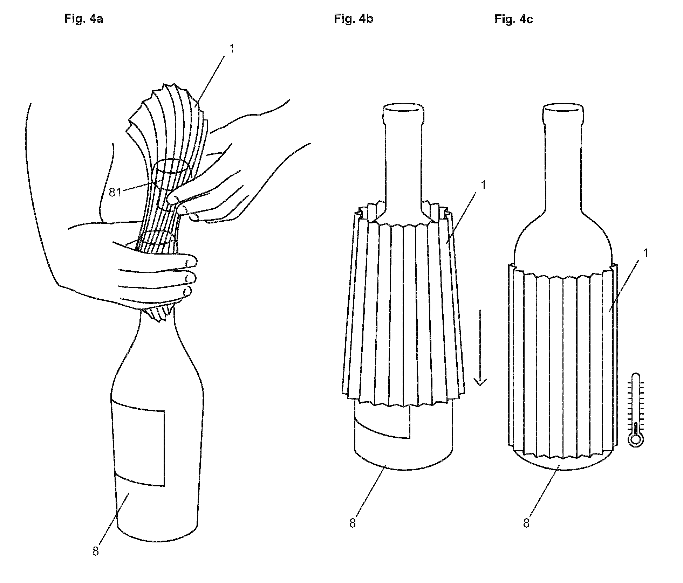

Fig. 4a zeigt das über den Hals einer Flasche 8 gestreifte Werkzeug 1 mit dem von der Flasche 8 gelösten Verschluss oder Zapfen 81. Hier zeigt sich ein weiterer Vorteil des Werkzeugs 1, welches auf den geringen Durchmesser des Flaschenhalses und des Zapfens 81 der Flasche 8 komprimiert werden kann.

Besonders elegant ist die weitere Verwendung des Werkzeugs 1, die dem Kühlhalten des in der Flasche 8 vorgesehenen Getränks dient. Nach dem Öffnen der Flasche wird das Werkzeug 1 wieder in die zylindrische Form gebracht und über den Flaschenkörper geführt, wie dies die Figuren 4b und 4c zeigen. Aufgrund der isolierenden Wirkung des Werkzeugs 1 wird die Flasche 8 in der Folge kühl gehalten.

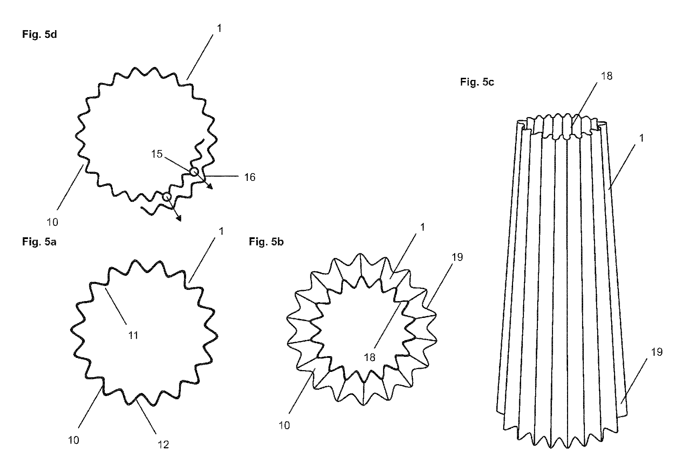

Fig. 5a zeigt das erfindungsgemässe Werkzeug 1 mit dem wellenförmigen oder sägezahnförmigen Querschnitt des Werkzeugkörpers i In dieser Ausgestaltung liegt somit ein paralleler Strukturverlauf an der Innenseite 11 und der Aussenseite 12 des Werkzeugkörpers 10 vor. Der Werkzeugkörper 10 bildet daher eine dehnbare Feder, die leicht über den Unterarm des Anwenders gestreift werden kann.

Fig. 5b zeigt das einseitig expandierte Werkzeug 1 von Fig. 1 von oben gesehen und Fig. 5c zeigt das Werkzeug 1 von Fig. 5b von der Seite gesehen. Das obere Endstück 18 weist einen geringeren Durchmesser auf, als das untere Endstück 19. Diese Differenz der Durchmesser kann durch Krafteinwirkung bewirkt oder in die Struktur des Werkzeugkörpers 10 eingeprägt sein.

Oft weist der Verschluss eines Behälters einen geringeren Durchmesser auf als der Körper des Behälters, was durch Reduktion des Durchmessers von einem zum anderen Ende 18-19 des Werkzeugs 1 vorteilhaft berücksichtigt werden kann. Ferner kann der Übergang von einem ersten zu einem zweiten Durchmesser stufenweise erfolgen.

Fig. 5d zeigt schematisch ein vorzugsweise ausgestaltetes Werkzeug 1 welches als elastische Platte ausgebildet und mit Verbindungselementen 15, 16 versehen ist, die es erlauben, zwei einander gegenüberliegende Seiten des Werkzeugs 1 miteinander zu verbinden, wodurch die Form eines Zylinderstücks oder Ärmels resultiert, wie sie in Fig. 2a gezeigt ist.

Die Verbindungselemente 15, 16 können einfach ausgestaltet sein. Z.B. sind am ersten Endstück des Werkzeugkörpers 10 kugelförmige Verschlusselemente 15 vorgesehen, die in Schlitzöffnungen 16 eindrückbar sind, die im zweiten Endstück des Werkzeugkörpers 10 vorgesehen sind. Alternativ können auch zueinander korrespondierende Teile von Druckknöpfen an den Endstück vorgesehen werden.

## Patentansprüche

1. Werkzeug (1) zum Erfassen oder Betätigen eines Gegenstandes, insbesondere zum Öffnen eines Behälters, mit einem flächigen oder plattenförmigen Werkzeugkörper (10), der aus einem elastischen Kunststoffmaterial gefertigt ist, **dadurch gekennzeichnet, dass** der Werkzeugkörper (10) ein in sich geschlossenes, hohles Zylinderstück bildet oder dass der Werkzeugkörper (10) an einander gegenüberliegenden Seiten zueinander komplementäre Verschlusselemente (15, 16) aufweist, mittels denen der Werkstoffkörper (10) in der Form eines hohlen Zylinderstücks fixierbar ist und dass der Werkzeugkörper (10) zumindest an der Innenseite eine rutschhemmende Oberfläche (11) aufweist.

2. Werkzeug (1) nach Anspruch 1, **dadurch gekennzeichnet, dass** der Werkzeugkörper (10) in der Form als Zylinderstück an der Innenseite (11) und/oder der Aussenseite (12) mit einem rutschhemmenden Profil versehen ist oder dass die beiden Seiten des Werkzeugkörpers (10) unterschiedliche rutschhemmende Profile aufweisen.

3. Werkzeug (1) nach Anspruch 1 oder 2, **dadurch gekennzeichnet, dass** die Innenseite (11) und/oder die Aussenseite (12) des Werkzeugkörpers (10) rutschhemmende Strukturelemente, wie Längsrippen, Rillen, Wellen oder Pyramiden aufweisen.

4. Werkzeug (1) nach Anspruch 1, 2 oder 3, **dadurch gekennzeichnet, dass** der Werkzeugkörper (10) aus einem dehnungselastischen Kunststoff besteht und/oder dass der Werkzeugkörper (10) eine dehnbare Struktur aufweist.

5. Werkzeug (1) nach einem der Ansprüche 1-4, **dadurch gekennzeichnet, dass** der Werkzeugkörper (10) einen wellenförmigen oder sägezahnförmigen Querschnitt aufweist.

6. Werkzeug (1) nach einem der Ansprüche 1-5, **dadurch gekennzeichnet, dass** der Werkzeugkörper (10) eine thermisch isolierende Struktur aufweist und/oder zumindest teilweise aus einem thermisch isolierenden Kunststoff gefertigt ist.

7. Werkzeug (1) nach einem der Ansprüche 1-6, **dadurch gekennzeichnet, dass** der Werkzeugkörper (10) eine Vielzahl von Hohlräumen aufweist, die nach aussen geöffnet oder verschlossen sind und/oder dass der Werkzeugkörper (10) mehrere hohle Kanäle aufweist, die den Werkzeugkörper (10) parallel oder schräg zu seiner Längsachse durchlaufen.

8. Werkzeug (1) nach einem der Ansprüche 1-7, **dadurch gekennzeichnet, dass** der Werkzeugkörper (10) aus einer einzigen Schicht besteht oder dass der Werkzeugkörper (10) aus einem Laminat mit mehreren Laminatschichten besteht.

9. Werkzeug (1) nach Anspruch 8, **dadurch gekennzeichnet, dass** wenigstens eine zwischen zwei Schichten eingeschlossene Laminatschicht mit Ausnehmungen versehen ist.

10. Werkzeug (1) nach einem der Ansprüche 1-9, **dadurch gekennzeichnet, dass** der Werkzeugkörper (10) oder eine Laminatschicht aus einem temperaturbeständigen und vorzugsweise feuerfesten Elastomer, wie Fluorelastomer, Neopren oder Silikon gefertigt ist.

11. Werkzeug (1) nach einem der Ansprüche 1-10, **dadurch gekennzeichnet, dass** der gegebenenfalls in sich geschlossene Werkzeugkörper (10) ein Erzeugnis eines Extrusionsverfahrens oder eine Spritzgussverfahrens ist.

12. Werkzeug (1) nach einem der Ansprüche 1-11, **dadurch gekennzeichnet, dass** der Durchmesser des Werkzeugkörpers (10) sich von einem Zylinderende (18) zum anderen Zylinderende (19) um einen Faktor im Bereich von etwa 10 % - 50 % graduell oder stufenweise reduziert.

13. Werkzeug (1) nach einem der Ansprüche 1-12, **dadurch gekennzeichnet, dass** der Werkzeugkörper (10) eine Dicke im Bereich von etwa 0.4 mm - 10 mm aufweist.

14. Werkzeug (1) nach einem der Ansprüche 1-13, **dadurch gekennzeichnet, dass** der Werkzeugkörper (10) in der Normalform des Zylinderstücks einen an den zu manipulierenden Gegenstand angepassten Zylinderdurchmesser vorzugsweise im Bereich von etwa 75 mm - 250 mm aufweist.

15. Werkzeug (1) nach einem der Ansprüche 1-14, **dadurch gekennzeichnet, dass** der Werkzeugkörper (10) in der Normalform des Zylinderstücks eine an den zu manipulierenden Gegenstand angepasste Zylinderhöhe vorzugsweise im Bereich von etwa 100 mm - 250 mm aufweist.
